# EUROPÄISCHE PATENTSCHRIFT

(11) **EP 2 150 396 B1**
(45) Veröffentlichungstag und Bekanntmachung des Hinweises auf die Patenterteilung: **12.09.2012**
(21) Anmeldenummer: 08734493.3
(22) Anmeldetag: 21.04.2008
(51) Int. Cl.: B29C 70/40, B29C 70/20, B29C 70/46, B29C 70/54, B29C 33/06, B29C 35/08

(54) **VERFAHREN ZUR UMFORMUNG VON PROFILEN AUS UNIDIREKTIONAL FASERVERSTÄRKTEN COMPOSITMATERIALIEN WÄHREND DES FERTIGUNGSPROZESSES**
METHOD FOR SHAPING PROFILES OF UNIDIRECTIONAL FIBRE REINFORCED COMPOSITE MATERIALS DURING THE PRODUCTION PROCESS
PROCÉDÉ DE FORMAGE DE PROFILÉS À PARTIR DE MATIÈRES COMPOSITES RENFORCEES PAR FIBRES UNIDIRECTIONNELLES PENDANT LE PROCESSUS DE FABRICATION

(30) Priorität: 23.04.2007 DE 102007019983
(43) Veröffentlichungstag der Anmeldung: 10.02.2010
(73) Patentinhaber: Polystal Composites GmbH, 39340 Haldensleben (DE)
(72) Erfinder: BEHREND, Christian, 39175 Biederitz (DE); GEISS, Detlev, 38464 Gross Twülpstedt (DE); HILDEBRANDT, Björn, 39179 Barleben (DE); SCHMIEDER, Helmut, 06217 Merseburg (DE)
(74) Vertreter: Fischer, Volker
(86) Internationale Anmeldenummer: PCT/DE2008/000684
(87) Internationale Veröffentlichungsnummer: WO 2008/128527

(56) Entgegenhaltungen:
- EP-A2- 0 579 163
- DE-A1- 3 411 893
- FR-A1- 2 618 378
- GB-A- 2 245 893
- US-A- 4 477 707
- US-A1- 2002 180 112

## Beschreibung

Die Erfindung betrifft ein Verfahren zur Umformung von Profilen aus unidirektional faserverstärkten Compositmaterialien, die durch einen den Compositmaterialstrang hinreichend dicht umwindenden Umwindefaden stabilisiert sind, während des Fertigungsprozesses, wobei die Umformung des unidirektional faserverstärkten Compositmaterials in einem dem Pultrusionsprozess nachgeordnetem Verfahrensschritt mittels eines Pressformwerkzeuges erfolgt.

Die Herstellung von gebogenen oder während des Fertigungsprozesses teilweise zu verformenden Profilen wird erreicht, indem die gezogenen Stränge durch stationäre oder intermittierende Formwerkzeuge in die gewünschte Raumform gepresst und in der Form einer formstabilisierenden Härtung unterzogen werden. Die verwendeten Formen sind, wie bei Presswerkzeugen üblich, weitgehend geschlossen ausgeführt, um den Pressdruck allseitig aufzunehmen. Die formstabilisierende Härtung erfolgt thermisch, indem über die Wandung der Form auf das in der Form gepresste Compositmaterial Wärmeenergie übertragen wird und die Reaktivharzmasse infolge dieses Wärmeenergieeintrages polymerisiert. Dabei entsteht ein verformtes duroplastisches Compositmaterial. Ein entsprechendes Verfahren sowie eine Vorrichtung zur Durchführung dieses Verfahrens sind beispielsweise in der DE 34 11 893 A1 beschrieben.

Nachteilig bei den aus dem Stand der Technik bekannten Lösungen ist eine geringe Fertigungsgeschwindigkeit infolge einer erheblichen Härtezeit der Reaktivharzmasse. Insbesondere bei Profilquerschnitten mit einem geringen Verhältnis vom Profilumfang zur Profilquerschnittsfläche ist der Eintrag der zur Härtung der Reaktivharzmasse notwendigen Wärmeenergiemenge in das Compositmaterial aufgrund des vergleichsweise schlechten Wärmeleitvermögens des Compositmaterials zeitaufwendig. Die Oberflächentemperatur der Formwandung des Presswerkzeuges ist nur begrenzt anhebbar, da durch Wärmestau und Überhitzung bleibende Schäden am Compositmaterial auftreten können.

So enthält zur Vermeidung der Rissbildung durch thermische Spannungen während des Härtevorganges das Formgebungswerkzeug gemäß der DE 696 05 645 T2 Heiz- und Kühlregionen zur Einflussnahme auf den Polymerisationsprozess.

Eine ausreichende Durchhärtung der mit geeigneten Harzsystemen gefertigten, in der Pressform zunächst formstabilisierten Formkörper kann außerhalb des Formgebungswerkzeuges durch Zufuhr von Wärmeenergiestrahlung und/oder anderer geeigneter energiereicher Strahlung erfolgen.

Aus der FR 2 618 378 A1 ist eine Vorrichtung zur Herstellung von Verbundwerkstoffen in Form eines Stranges oder Rohres bekannt, bei der der zu fertigende aus Fasern und einem faserverbindendem Harz bestehende Strang durch eine formgebende Düse geführt wird, in deren Wandung Quarzglasfenster angeordnet sind, durch die Mikrowellenenergie in den geformten Strang eingetragen werden kann. Die durch die Quarzglasfenster eingetragene Mikrowellenenergie bewirkt eine schnelle und gleichmäßige Härtung des Stranges. Nachteilig hierbei ist der aufwendige Aufbau der Düse, speziell der Einbau der Quarzglasfenster, der so erfolgen muss, dass die Quarzglasfenster einem möglicherweise in der Düse auftretendem Druck widerstehen müssen. Hinzu kommen Probleme der Verschmutzung der Quarzglasfenster während des Fertigungsprozesses.

Bekannt sind darüber hinaus auch Verfahren mit Vorpolymerisationsstrecken, bei denen der Compositmaterialstrang vor der Formgebung im Presswerkzeug vorgehärtet wird. Nachteilig hierbei sind eine komplizierte Reaktionsführung der Polymerisation der Reaktivharzmasse, eine Verschlechterung der Umformbarkeit des Stranges während des Pressvorganges infolge einer geringeren Matrixfließfähigkeit des vorgehärteten Stranges und damit verbunden werkzeugbedingt hohe Reibungskräfte. Die Fertigungsgeschwindigkeit für umgeformte Rundprofile aus unidirektional faserverstärkten Compositmaterialien ist damit begrenzt.

Ziel der Erfindung ist ein Verfahren zur Umformung von Rundprofilen aus unidirektional faserverstärkten Compositmaterialien, das eine hohe Fertigungsgeschwindigkeit erlaubt. Dazu besteht die Aufgabe, die Härtezeit der Reaktivharzmasse bis zu einem formstabilisierten Formkörper zu verkürzen.

Erfindungsgemäß wird diese Aufgabe durch ein Verfahren zur Umformung von Profilen aus unidirektional faserverstärkten Compositmaterialien während des Fertigungsprozesses gelöst, das mindestens die Verfahrensschritte des 1. Patentanspruches umfasst. Die Patentansprüche 2 bis 6 beschreiben vorteilhafte Weiterbildungen des Verfahrens.

Das erfindungsgemäße Verfahren zur Umformung von Profilen aus unidirektional faserverstärkten Compositmaterialien während des Fertigungsprozesses umfasst mindestens die Verfahrensschritte
- Herstellung eines unidirektional faserverstärkten Rundprofilcompositmaterialstranges nach dem Pultrusionsverfahren,
- Umwinden des Rundprofilcompositmaterialstranges mit mindestens einem Umwindefaden,
- Umformen des Rundprofilcompositmaterialstranges in einer Pressform und
- Härtung der Reaktivharzmasse des umgeformten Rundprofilcompositmaterialstranges durch Einleitung einer die Härtung bewirkenden energiereichen Strahlung,
wobei das Verfahren dadurch gekennzeichnet ist, dass
- die Umformung des Rundprofilcompositmaterialstranges in einer Pressform erfolgt, welche mindestens einen offenen Bereich aufweist, so dass die Pressform den Rundprofilcompositmaterialstrang nicht vollständig einschließt, wobei der Umwindefaden im offenen Bereich der Pressform die bei der Umformung des Rundprofilcompositmaterialstranges auftretenden Presskräfte aufnimmt,
- eine formstabilisierende Härtung der Reaktivharzmasse durch Einleitung der die Härtung bewirkenden energiereichen Strahlung durch den offenen Bereich der Pressform vorgenommen wird und
- eine Nachhärtung des formstabilisierten Formkörpers nach dem Verlassen der Pressform erfolgt.

Die durch den offenen Bereich der Pressform eingeleitete energiereiche Strahlung (z.B. Licht- oder µ-Wellenstrahlung) dringt nahezu ohne Zeitversatz tief in das Compositmaterial ein, wird von diesem absorbiert und bewirkt so eine Härtung der Reaktivharzmasse über die gesamte Querschnittsfläche des in der Pressform befindlichen Compositmaterials. Dabei ist eine Verwendung spezieller Sensibilisatoren, die infolge ihrer Absorptionseigenschaften große Eindringtiefen der energiereichen Strahlung und hohe Polymerisationsgeschwindigkeiten der Reaktivharzmasse bewirken, empfehlenswert.

Es kann zweckmäßig sein, mittels erwärmter Pressformwandflächen durch einen zusätzlichen Wärmeenergieeintrag in das in der Pressform befindliche Compositmaterial die formstabilisierende Härtung der Reaktivharzmasse zu unterstützten.

Es hat sich gezeigt, dass bei hinreichender Dichte des Umwindefadens, wie sie beim bekannten Verfahren der Herstellung von unidirektional faserverstärkten Compositsträngen nach dem Polystal-Verfahren üblich ist, also ein Umwindefadenabstand in Längsrichtung des Compositmaterialstranges <5 mm, der Umwindefaden im offenen Bereich der Pressform die bei der Umformung des Compositmaterialstranges auftretenden Presskräfte aufnimmt. Dadurch ist es möglich, die Formgebung des Compositmaterialstranges durch eine Pressform zu bewirken, die den Compositmaterialstrang bei der Formgebung nicht vollständig einschließt, sondern offene Bereiche aufweist, durch die eine die Polymerisation der Reaktivharzmasse bewirkende energiereiche Strahlung in den Compositmaterialstrang eingeleitet werden kann. Dadurch wird es möglich, die an sich bekannte Strahlungshärtung beim Formgebungsverfahren eines Compositmaterialstranges mittels einer Pressform anzuwenden. Die Strahlungshärtung zeichnet sich aufgrund des tiefen Eindringens der energiereichen Strahlung in den Compositmaterialstrang und der Initiierung der Härtung der Reaktivharzmasse über einen großen Bereich des Volumens des umgeformten Compositmaterialstranges durch kurze Härtezeiten aus, so dass gegenüber bekannten Verfahren der Härtung umgeformter Compositmaterialien durch die Einleitung von Wärmeenergie über die Wandung der Form auf das in der Form gepresste Compositmaterial erheblich höhere Fertigungsgeschwindigkeiten realisiert werden können. Eine thermische Auspolymerisation und Nachtemperierung des zunächst in der Pressform bis zur Formstabilität gehärteten Formkörpers erfolgt in bekannter Weise.

Eine Vorwärmung des Strangs vor Erreichung des Formgebungswerkzeugs ist möglich. Diese dient ausschließlich der Anhebung der Fliessfähigkeit des Matrixmaterials und der Vermeidung von Einfriereffekten durch eine durch Lichtstrahlung initiierte Polymerisation. Eine Vorpolymerisation ist nicht erwünscht.

Die Handhabung des Materials gestaltet sich unproblematisch. Es wird ein besseres Fließen beim Umformungsprozess und eine verbesserte Reaktionsführung bei der Strahlungshärtung erreicht.

Zweckmäßig wird es sein, die Umwicklung des Compositmaterialstranges mit einem Übermaß der Länge des Umwindefadens auszuführen, da der Umfang der Querschnittsfläche des verformten Profils gegenüber dem Rundprofil bei gleichem Volumeninhalt ansteigt. Möglich ist auch die Verwendung eines längselastischen Umwindefadens.

Die Erfindung soll nachfolgend anhand eines Ausführungsbeispieles näher erläutert werden.

Mittels eines Düsenpultrusionsverfahrens wird ein unidirektionales e-glasfaserverstärktes Rundprofil, Tex=129600, mit einem Durchmesser von D=10 mm hergestellt. Das Rundprofil wird mit zwei Polyesterfäden im Kreuzschlag umwunden. Der Umwindefadenabstand in Längsrichtung des Rundprofiles beträgt dabei 2,5 mm. Als Reaktivharzmatrixmaterial wird ein styrolverdünntes ungesättigtes Polyesterharz verwendet. In das Polyesterharz werden vor der Verarbeitung als Photoinitiator ca. 1 Ma% eines Acylphosphinoxides sowie als thermischer Initiator ca. 1,5 Ma% eines thermisch zerfallenden Peroxydes eingemischt. Der Compositmaterialstrang wird auf eine Temperatur von ca. 60 °C vorgewärmt. Der vorgewärmte Compositmaterialstrang D=10 mm wird in einem Presswerkzeug auf 6 mm abgeplattet. Das Presswerkzeug weist an zwei gegenüberliegenden Längsseiten jeweils über die gesamte Länge des Presswerkzeuges einen Öffnungsspalt von 6 mm auf. Während der Compositmaterialstrang im Presswerkzeug gepresst ist, wird er einer formstabilisierenden Härtung unterzogen, indem eine Bestrahlung mit Licht, das einen hohen Anteil (ca. 30 %) im Wellenlängenbereich von 380 - 450 nm aufweist, mit einer Leistung von ca. 1 W/cm² über eine Zeit von 20 s erfolgt. Ein erheblicher Anteil des Lichtes dieser Wellenlänge dringt tief in den Compositmaterialstrang ein, aktiviert den Photoinitiator und bewirkt aus der Tiefe heraus eine formstabilisierende Härtung des umgeformten Compositmaterialstranges durch Polymerisation des Reaktivharzes. Danach wird die Pressform geöffnet und der formstabilisierte Compositmaterialstrang in bekannter Weise einer thermischen Nachhärtung und Temperung unterzogen.

## Patentansprüche

1. Verfahren zur Umformung von Profilen aus unidirektional faserverstärkten Compositmaterialien während des Fertigungsprozesses, mindestens die Verfahrensschritte
• Herstellung eines unidirektional faserverstärkten Rundprofilcompositmaterialstranges nach dem Pultrusionsverfahren,
• Umwinden des Rundprofilcompositmaterialstranges mit einem oder zwzi Umwindefäden,
• Umformen des Rundprofilcompositmaterialstranges in einer Pressform und
• Härtung der Reaktivharzmasse des umgeformten Rundprofilcompositmaterialstranges durch Einleitung einer die Härtung bewirkenden energiereichen Strahlung
umfassend,
**gekennzeichnet dadurch, dass**
• die Umformung des Rundprofilcompositmaterialstranges in einer Pressform erfolgt, welche mindestens einen offenen Bereich aufweist, so dass die Pressform den Rundprofilcompositmaterialstrang nicht vollständig einschließt, wobei der Umwindefaden im offenen Bereich der Pressform die bei der Umformung des Rundprofilcompositmaterialstranges auftretenden Presskräfte aufnimmt,
• eine formstabilisierende Härtung der Reaktivharzmasse durch Einleitung der die Härtung bewirkenden energiereichen Strahlung durch den offenen Bereich der Pressform vorgenommen wird und
• eine Nachhärtung des formstabilisierten Formkörpers nach dem Verlassen der Pressform erfolgt.

2. Verfahren nach Anspruch 1,
**gekennzeichnet dadurch, dass**
die Umformung in der Pressform eine Abplattung des Rundprofilcompositmaterialstranges ist, wobei der offene Bereich der Pressform als in ihrer Längsrichtung verlaufender Öffnungsspalt ausgebildet ist.

3. Verfahren nach Anspruch 1 oder 2,
**gekennzeichnet dadurch,**
**dass** die formstabilisierende Härtung der Reaktivharzmasse zusätzlich durch einen Wärmeenergieeintrag in das in der Pressform befindliche Compositmaterial mittels erwärmter Pressformwandflächen bewirkt wird.

4. Verfahren nach einem der Ansprüche 1, 2 oder 3,
**gekennzeichnet dadurch,**
**dass** der Rundprofilcompositmaterialstrang vor der Umformung in der Pressform vorgewärmt wird.

5. Verfahren nach einem der vorgenannten Ansprüche,
**gekennzeichnet dadurch,**
**dass** die Umwindung des Rundprofilcompositmaterialstranges mit einem Umwindefaden mit Übermaß vorgenommen wird.

6. Verfahren nach einem der vorgenannten Ansprüche,
**gekennzeichnet dadurch,**
**dass** die Umwindung des Rundprofilcompositmaterialstranges mit einem längselastischen Umwindefaden erfolgt.

## Claims

1. Process for shaping profiles of unidirectionally fibre-reinforced composite materials during the manufacturing process, which comprises at least the process steps
• production of a unidirectionally fibre-reinforced round profile composite rod by the pultrusion process,
• winding of one or two winding threads around the round profile composite rod,
• moulding of the round profile composite rod in a pressing mould and
• curing of the reactive resin composition of the moulded round profile composite rod by input of high-energy radiation which brings about curing, **characterized in that**
• the moulding of the round profile composite rod is carried out in a pressing mould which has at least one open region so that the pressing mould does not fully enclose the round profile composite rod, where the winding thread takes up the pressing forces occurring in the moulding of the round profile composite rod in the open region of the pressing mould,
• a shape-stabilizing curing of the reactive resin composition is carried out by input of the high-energy radiation which brings about curing through the open region of the pressing mould and
• after-curing of the shape-stabilized shaped body is carried out after leaving the pressing mould.

2. Process according to Claim 1, **characterized in that** the moulding in the pressing mould is a flattening of the round profile composite rod, with the open region of the pressing mould being configured as an open slit running in the longitudinal direction thereof.

3. Process according to Claim 1 or 2, **characterized in that** the shape-stabilizing curing of the reactive resin composition is additionally brought about by heat energy input into the composite material present in the pressing mould by means of heated pressing mould walls.

4. Process according to any of Claims 1, 2 or 3, **characterized in that** the round profile composite rod is preheated before moulding in the pressing mould.

5. Process according to any of the preceding claims, **characterized in that** the winding of a winding thread around the round profile composite rod is carried out using an excess.

6. Process according to any of the preceding claims, **characterized in that** the winding of a winding thread around the round profile composite rod is carried out using a longitudinally elastic winding thread.

## Revendications

1. Procédé de formage de profilés à partir de matériaux composites à renforcement fibreux unidirectionnel, au cours du processus de production, comprenant au moins les étapes opératoires consistant à
. fabriquer un boudin de matériau composite à profil rond et à renforcement fibreux unidirectionnel, selon le procédé de pultrusion,
. envelopper ledit boudin de matériau composite, à profil rond, à l'aide d'un ou de deux fils d'enveloppement,
. mettre en forme ledit boudin de matériau composite à profil rond, dans un moule de pressage, et
. durcir la masse de résine réactive dudit boudin de matériau composite à profil rond, mis en forme, par introduction d'un rayonnement de haute énergie qui provoque le durcissement,
**caractérisé par le fait**
. **que** la mise en forme du boudin de matériau composite, à profil rond, a lieu dans un moule de pressage présentant au moins une région ouverte, de sorte que ledit moule de pressage n'emprisonne pas l'intégralité dudit boudin de matériau composite à profil rond, sachant que le fil d'enveloppement absorbe, dans ladite région ouverte dudit moule de pressage, les forces de pressage développées au cours de la mise en forme dudit boudin de matériau composite à profil rond,
. **qu'**un durcissement, stabilisant la forme de la masse de résine réactive, est effectué par introduction du rayonnement de haute énergie, provoquant ledit durcissement, à travers ladite région ouverte dudit moule de pressage, et
. **qu'**un post-durcissement du corps moulé, dont la forme est stabilisée, est opéré après la sortie hors dudit moule de pressage.

2. Procédé selon la revendication 1,
**caractérisé par le fait que**
la mise en forme, dans le moule de pressage, consiste en un aplatissage du boudin de matériau composite à profil rond, la région ouverte dudit moule de pressage étant alors réalisée sous la forme d'un interstice d'ouverture s'étendant dans sa direction longitudinale.

3. Procédé selon la revendication 1 ou 2,
**caractérisé par le fait**
**que** le durcissement, stabilisant la forme de la masse de résine réactive, est additionnellement provoqué par apport d'énergie thermique dans le matériau composite renfermé par le moule de pressage, au moyen de surfaces de parois chauffées dudit moule de pressage.

4. Procédé selon l'une des revendications 1, 2 ou 3,
**caractérisé par le fait**
**que** le boudin de matériau composite, à profil rond, est préchauffé préalablement à la mise en forme dans le moule de pressage.

5. Procédé selon l'une des revendications précédentes,
**caractérisé par le fait**
**que** l'enveloppement du boudin de matériau composite à profil rond, par un fil d'enveloppement, est exécuté avec surdimensionnement.

6. Procédé selon l'une des revendications précédentes,
**caractérisé par le fait**
**que** l'enveloppement du boudin de matériau composite, à profil rond, a lieu à l'aide d'un fil d'enveloppement doué d'élasticité longitudinale.
